# EUROPÄISCHE PATENTSCHRIFT

(11) **EP 2 634 050 B1**
(45) Veröffentlichungstag und Bekanntmachung des Hinweises auf die Patenterteilung: **30.03.2016**
(21) Anmeldenummer: 13000308.0
(22) Anmeldetag: 22.01.2013
(51) Int. Cl.: B60R 25/0215

(54) **Elektrische Lenkverriegelung**
Electric steering lock
Verrouillage de direction électrique

(30) Priorität: 02.03.2012 DE 102012004055
(43) Veröffentlichungstag der Anmeldung: 04.09.2013
(73) Patentinhaber: Huf Hülsbeck & Fürst GmbH & Co. KG, 42551 Velbert (DE)
(72) Erfinder: Zillmann, Horst, 81243 München (DE); Heppner, Mario, 82008 Unterhaching (DE)
(74) Vertreter: Schäfer, Matthias W.

(56) Entgegenhaltungen:
- EP-A1- 2 418 129
- EP-A2- 1 249 375
- US-A1- 2004 069 026

## Beschreibung

### Gebiet der Erfindung

Die Erfindung betrifft eine elektrische Lenkverriegelung für ein Fahrzeug mit einer Grundplatte, auf der ein Motor mit Antriebswelle und Getrieberad angeordnet ist, und ein Verfahren zur Betätigung einer elektrischen Lenkverriegelung. Das Getrieberad treibt ein Antriebsrad mit einer oberen und einer unteren Steuerkurve an, wobei die untere Steuerkurve mit dem Betätigungsschlitten eines Sperrbolzen im Eingriff steht. Dabei wird der Sperrbolzen gegenüber der Grundplatte und dem Betätigungsschlitten bewegt.

### Stand der Technik

Gemäß dem bekannten Stand der Technik wird bei gattungsgemäßen Lenkverriegelungen der Sperrbolzen zwischen einer Sperrstellung zur Sperrung der Lenkspindel und einer Freigabestellung zur Freigabe der Lenkspindel senkrecht gegenüber dem Betätigungsschlitten bewegt. Dies bedingt bei einem hohen Hub des Sperrbolzen einen großen Bauraum.

Auch aus der EP 2 319 737 A1 ist eine Lenkverriegelung mit einem verschiebbaren Betätiger und einem verschiebbaren Sperrglied einer Lenkspindel eines Kraftfahrzeugs bekannt. Dabei ist der Sperrbolzen wiederum senkrecht gegenüber dem Betätiger angeordnet, wobei die Bewegungsrichtung des Betätigers gegenüber einer axialen Achse einer Lenkspindel geneigt ist.

Aus der EP 1 249 375 A2 1 ist eine weitere Lenkverriegelung einer Lenksäule bekannt. Diese weist eine Grundplatte eines Gehäuses 22,
eine auf der Grundplatte des Gehäuses 22 angebrachte Antriebseinheit 50, ein Antriebsrad 40, das mit der Antriebseinheit 50 in Eingriff steht,
einen Betätigungsschlitten 20, der von dem Antriebsrad 40 ansteuerbar ist, einen Sperrbolzen 30 zum Verriegeln einer Lenkachse und einen Aktuator 35 bedingt durch eine Feder im Sperrglied 30, der eine erste Kraftkomponente senkrecht zur Bewegungsrichtung des Betätigungsschlitten 20 und eine zweite Kraftkomponente parallel zur Bewegungsrichtung des Betätigungsschlitten 20 auf.

Der Erfindung liegt die Aufgabe zugrunde, eine Lenkverriegelung zur Verfügung zu stellen, bei der ein geringer Bauraum durch eine geringe Anzahl an Bauteilen und durch einen hohen Hub des Sperrbolzen bei gleichzeitig kurzem Verschiebeweg des Betätigungsschlittens erzielt wird. Ferner soll ein Verfahren zur Betätigung einer erfindungsgemäßen Lenkverriegelung zur Verfügung gestellt werden.

Diese Aufgabe wird durch eine Lenkverriegelung mit einem gegenüber einem Betätigungsschlitten geneigten Sperrbolzen mit den Merkmalen des Anspruchs 1 sowie ein Verfahren mit den Merkmalen des Anspruchs 14 gelöst.

Dazu wird eine elektrische Lenkverriegelung für ein Fahrzeug bereitgestellt, die folgendes aufweist:
- eine Grundplatte,
- eine auf der Grundplatte angebrachte Antriebseinheit,
- ein Antriebsrad, das mit der Antriebseinheit in Eingriff steht,
- einen Betätigungsschlitten mit einem kurven- oder keilförmigen Hubabschnitt und einem Steuerungsabschnitt, der von dem Antriebsrad ansteuerbar ist,
- einen Sperrbolzen zum Verriegeln einer Lenkachse, der durch den Hubabschnitt des Betätigungsschlittens verschiebbar ist und
- einen Aktuator, der eine erste Kraftkomponente senkrecht zur Bewegungsrichtung des Betätigungsschlitten und eine zweite Kraftkomponente parallel zur Bewegungsrichtung des Betätigungsschlitten aufweist, wobei der Sperrbolzen über ein Hubelement auf dem Hubabschnitt anliegt.

Hierdurch wird eine Lenkverriegelung zur Verfügung gestellt, bei der ein geringer Bauraum durch eine geringe Anzahl an Bauteilen und durch einen hohen Hub des Sperrbolzen bei gleichzeitig kurzem Verschiebeweg des Betätigungsschlittens erzielt wird.

Vorteilhafterweise kann das Antriebsrad eine obere Steuerkurve, eine untere Steuerkurve und eine Verzahnung aufweisen. Dadurch wird ein kompakter Aufbau zur Verfügung gestellt.

Vorteilhafterweise weist ein von der oberen Steuerkurve des Antriebsrads betätigter Schieber eine Sicherungskante auf, die im unverriegelten Zustand der elektrischen Lenkverriegelung in eine Sicherungsnut des Sperrbolzen eingreift und einen Verriegelungsschutz zur Verfügung stellt. Dadurch wird ein Sperren der Lenkverriegelung verhindert.

Vorteilhafterweise sind die obere Steuerkurve, die untere Steuerkurve und die Verzahnung einteilig mit dem Antriebsrad ausgebildet. Durch diese integrale Ausbildung werden zusätzliche Bauteile vermieden und der Montageaufwand minimiert.

Vorteilhafterweise ist die obere Steuerkurve kulissenförmig auf einer einer Rotationsachse zugewandten Innenfläche und die untere Steuerkurve nockenförmig auf einer der Rotationsachse abgewandten Außenfläche ausgebildet. Diese Ausbildung der Steuerkurven ermöglicht wiederum einen integralen und kompakten Aufbau bei minimierten Fertigungskosten.

Vorteilhafterweise ist der kurven- oder keilförmige Hubabschnitt und der kulissenförmige untere Steuerungsabschnitt integral mit dem Betätigungsschlitten ausgebildet. Durch diese integrale Ausbildung werden wiederum zusätzliche Bauteile vermieden und der Montageaufwand weiterhin minimiert.

Vorzugsweise ist der Betätigungsschlitten parallel zur Bodenplatte in einer Betätigerschlittenbewegungsrichtung verschiebbar. Durch diese Parallelität wird eine einfache Kinematik erreicht, dies sich wiederum kostengünstig fertigen lässt.

Der Schieber, der Betätigungsschlitten und die Bodenplatte sind vorteilhafterweise parallel zueinander angeordnet. Augrund der parallelen Anordnung wird wiederum ein einfacher und platzsparender mechanischer Aufbau ermöglicht, der kostengünstig zu fertigen ist.

Eine Schieberbewegungsrichtung des Schiebers ist vorteilhafterweise im Wesentlichen parallel zur Betätigungsschlittenbewegungsrichtung des Betätigungsschlittens ausgerichtet. Durch diese Parallelität wird wiederum eine einfache Kinematik erreicht, dies sich wiederum kostengünstig fertigen lässt.

Um nochmals Bauraum einzusparen, ist vorteilhafterweise das Antriebsrad zwischen dem Schieber und dem Betätigungsschlitten angeordnet.

Vorteilhafterweise ist der Sperrbolzen zum Entriegeln über den Hubabschnitt des Betätigungsschlittens durch das Hubelement und zum Verriegeln durch den Aktuator Feder bewegbar. Dies bewirkt einen einfachen mechanischen Aufbau. Dabei kann das Hubelement z.B. als Bolzen ausgebildet sein. Aber auch andere geometrische Bauformen als auch eine integrale Ausführung mit dem Sperrbolzen sind denkbar.

Vorteilhafterweise weist die Antriebseinheit einen Motor mit Antriebswelle und Getrieberad auf. Diese kann bereits in einem montierten Zustand zeitsparend in die Lenkverriegelung eingesetzt werden und senkt wiederum die Anzahl der benötigten Einzelteile.

Der Sperrbolzen ist vorteilhafterweise gegenüber dem Betätigungsschlitten geneigt angeordnet und eine Hubbewegung in Sperrbolzenbewegungsrichtung, zwischen einer Sperrstellung zur Sperrung einer Lenkspindel und einer Freigabestellung zur Freigabe der Lenkspindel, geneigt gegenüber einer Betätigungsschlittenbewegungsrichtung des Betätigungsschlittens gerichtet. Dabei kann der Sperrbolzen mit einem Winkel von 10° bis 25 °, insbesondere um 15° bis 18°, gegenüber einer senkrechten Position zur Betätigungsschlittenbewegungsrichtung angeordnet und bewegt werden. Dies senkt wiederum den Bauraumbedarf und flexibilisiert die Anordnung der Lenkverriegelung bei der Lenkspindel. Eine senkrechte Anordnung des Sperrbolzen ist auch denkbar, wobei die Bewegungsrichtung des Sperrbolzen wiederum senkrecht als auch geneigt ausführbar sein kann.

Erfindungsgemäß weist das Verfahren zur Betätigung einer elektrischen Lenkung für ein Fahrzeug folgendes auf:
- eine Grundplatte,
- eine auf der Grundplatte angebrachte Antriebseinheit,
- ein Antriebsrad, das mit der Antriebseinheit in Eingriff steht,
- einen Betätigungsschlitten mit einem kurven- oder keilförmigen Hubabschnitt und einem Steuerungsabschnitt, der von dem Antriebsrad angesteuert wird,
- einen Sperrbolzen zum Verriegeln einer Lenkachse, der durch den Hubabschnitt des Betätigungsschlittens bewegt wird,
wobei das Verfahren folgende Schritte aufweist:
- Umwandlung der Rotationsbewegung der Antriebseinheit in eine translatorische Bewegung eines Betätigungsschlitten durch das Antriebsrad;
- Umwandlung der translatorischen Bewegungsrichtung des Betätigungsschlitten in eine Hubbewegung des Sperrbolzen durch den kurven- oder keilförmigen Hubabschnitt und ein Hubelement.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine perspektivische Ansicht der elektrischen Lenkverriegelung gemäß einer bevorzugten Ausführungsform der vorliegenden Erfindung;
Figur 2 eine perspektivische Ansicht der elektrischen Lenkverriegelung mit demontierter Platine gemäß der Ausführungsform nach Figur 1;
Figur 3 eine perspektivische Ansicht der elektrischen Lenkverriegelung mit den Bewegungsrichtungen von Sperrbolzen, Betätigungsschlitten und Schieber gemäß der Ausführungsform nach Figur 1;
Figur 4 eine perspektivische Untersicht der elektrischen Lenkverriegelung mit kulissenförmigem Steuerungsabschnitt und unterer Steuerkurve gemäß der Ausführungsform nach Figur 1;
Figur 5 eine perspektivische Ansicht des Antriebsrads mit oberer Steuerkurve gemäß der Ausführungsform nach Figur 1;
Figur 6 eine perspektivische Ansicht der zueinander geneigten Bewegungsrichtungen von Betätigungsschlitten und Sperrbolzen gemäß der Ausführungsform nach Figur 1;
Figur 7 eine perspektivische Detailansicht des Schiebers gemäß der Ausführungsform nach Figur 1;
Figur 8 eine perspektivische Ansicht der elektrischen Lenkverriegelung mit einem Abschnitt einer Lenkachse gemäß der Ausführungsform nach Figur 1;
Figur 9 eine Seitenansicht der elektrischen Lenkverriegelung gemäß der Ausführungsform nach Figur 1;
Figur 10 eine Schnittdarstellung A-A der elektrischen Lenkverriegelung gemäß der Ausführungsform nach Figur 1 und
Figur 11 eine Draufsicht der elektrischen Lenkverriegelung mit dem Schnittverlauf A-A gemäß der Ausführungsform nach Figur 1.

Nachfolgend beziehen sich Richtungsangaben auf die Zeichnungsebene bzw. auf die Längsachse der Grundplatte.

### Detaillierte Beschreibung bevorzugter Ausführungsformen

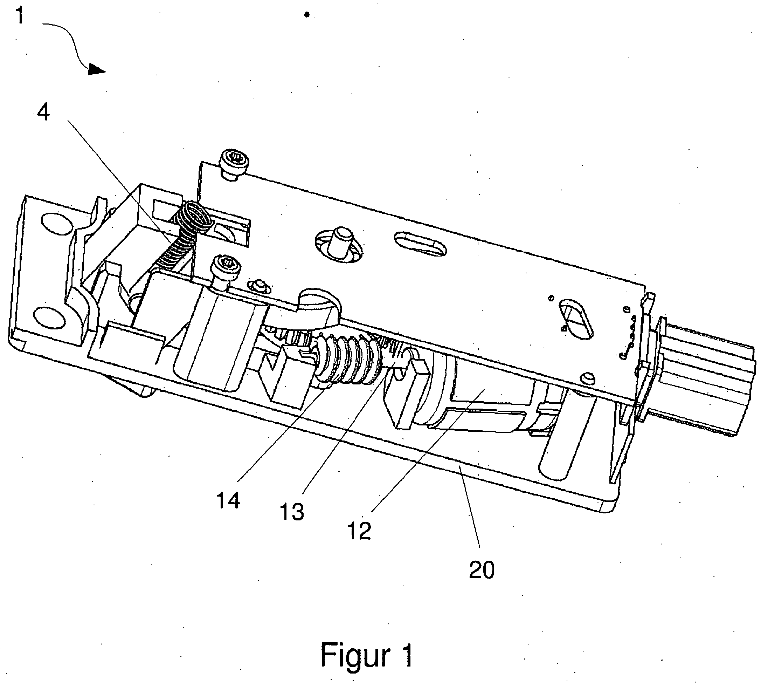

Die Figuren 1 bis 11 zeigen eine bevorzugte Ausführungsform einer elektrischen Lenkverriegelung 1 für ein Fahrzeug gemäß der vorliegenden Erfindung. Die elektrische Lenkverriegelung 1 weist eine rechteckig ausgeführte Grundplatte 20, einen Motor 12, eine Antriebswelle 13, ein Getrieberad 14, ein Antriebsrad 2, einen Betätigungsschlitten 7, einen Schieber 3 und einen Sperrbolzen 4 auf.

Der Motor 12 treibt über die Antriebswelle 13 das Getrieberad 14 an. Das Antriebsrad 2 weist eine obere Steuerkurve 2a, eine untere Steuerkurve 2b und eine mit dem Getrieberad 14 im Eingriff stehende Verzahnung 2c auf. Das Antriebsrad 2 bzw. die Drehachse 15 des Antriebsrads steht im Wesentlichen senkrecht zu der Grundplatte 20. Dabei ist das Antriebsrad 2, die obere Steuerkurve 2a, untere Steuerkurve 2b und die Verzahnung 2c als einstückiges Bauteil integral ausgeführt, welches im Spritzgussverfahren aus einem glasfaserverstärkten Kunststoff, hier PBT (Polybutylenterephthalat), hergestellt ist.

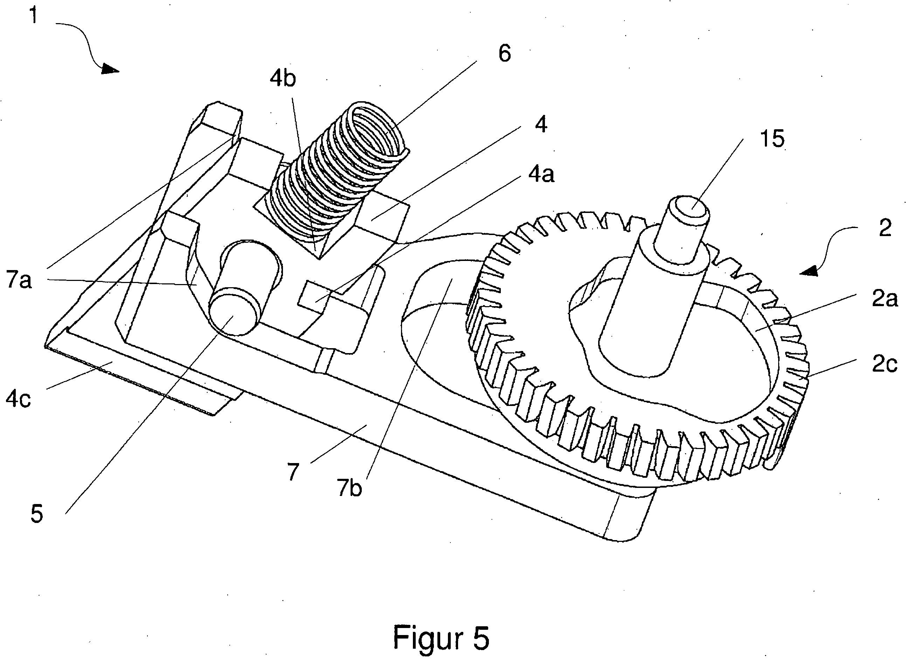

In Figur 5 ist die Verzahnung 2c des Antriebsrads 2 detailliert erkennbar, die zahnradförmig in einem mittleren Abschnitt des Antriebsrads 2 um die Drehachse 15 ausgeführt ist. In dieser Verzahnung 2c ist in einem der Drehachse 15 zugewandten oberen Abschnitt, die exzentrisch angeordnete, kulissenartige, obere Steuerkurve 2a integral ausgebildet, die den Schieber 3 translatorisch steuert.

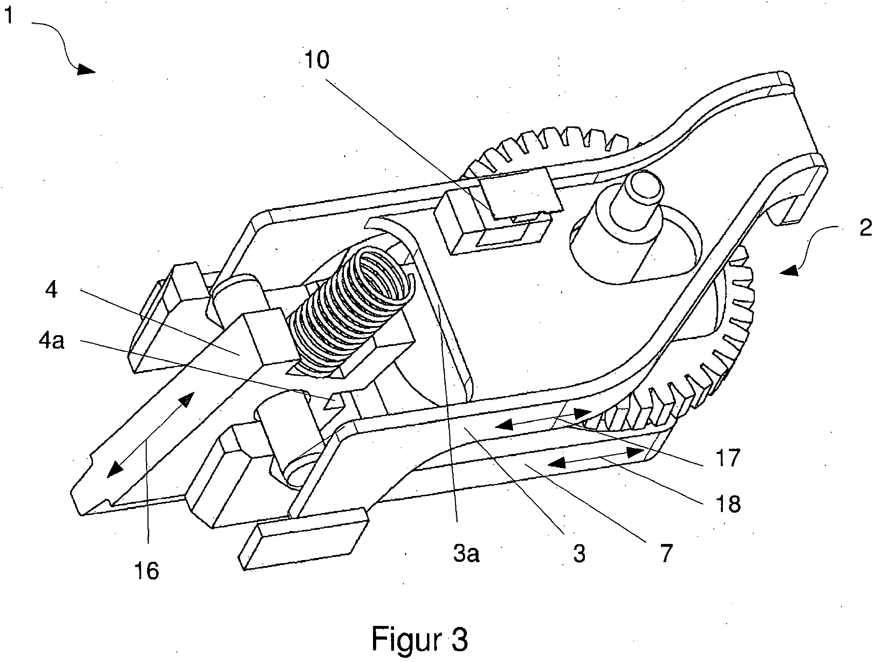

Wie aus Figur 3 entnehmbar, ist in einem unteren Abschnitt des Antriebsrads 2 die untere Steuerkurve 2b, als eine sich radial erstreckende, nockenförmige Hubkurve, ausgebildet. Diese nockenförmige, untere Steuerkurve 2b ist mit einem Steuerungsabschnitt 7b des Betätigungsschlittens 7 in Eingriff.

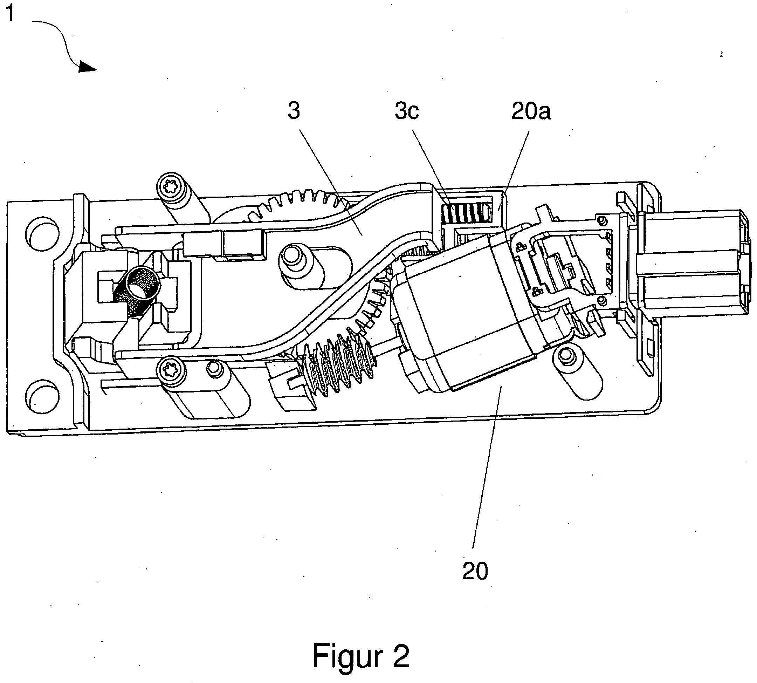

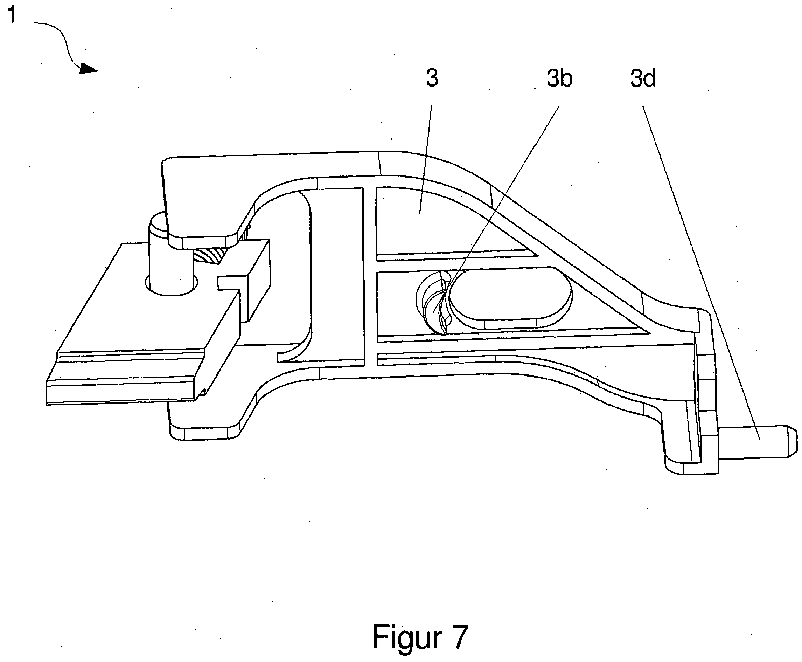

Der Schieber 3 besteht aus einem hinteren, im Wesentlichen ebenen, dreieckförmigen Abschnitt, gut in Figur 7 zu erkennen, der an seiner hinteren kürzeren Begrenzungsseite eine sich kielförmig quer und in Grundplattenrichtung erstreckende Fläche aufweist, die zum Aufbau einer Druckspannung durch eine Schieberfeder 3c zwischen dem Schieber 3 und der Grundplatte 20 ausgebildet ist. Dazu ist in der Grundplatte 20 eine aus Figur 2 entnehmbare Aufnahme 20 ausgebildet, in die die Schieberfeder 3c und ein Schieberbolzen 3d einbringbar sind, die den Schieber 3 über die als Abstützung dienende Fläche translatorisch in Richtung eines vorderen Abschnitts, und damit in Richtung Sperrbolzen führen und drücken.

Des Weiteren stellt der dreieckförmige Bereich eine langlochförmige Aussparung als Durchlass für die Drehachse 15 des Antriebsrads 2 zur Verfügung. Angrenzend an diesen Durchlass ist auf der Unterseite des Schiebers 3 eine im Wesentlichen halbzylinderförmige, sich von der Unterseite erstreckende, Eingriffsnase 3b ausgebildet, die sich mit der kulissenartigen oberen Steuerkurve 2a in Eingriff befindet und den Schieber 3 translatorisch steuert bzw. bewegt. Diese Bewegungsrichtung ist in Figur 3 als Schieberbewegungsrichtung 17 erkennbar. Stirnseitig ist im vorderen Bereich des dreieckförmigen Abschnitts eine sich im Wesentlichen horizontal erstreckende und quer zu einer Schieberbewegungsrichtung 17 angeordnete Sicherungskante 3a ausgebildet. Zuletzt weist der Schieber 3 im vorderen Abschnitt noch zwei sich parallel zur Schieberbewegungsrichtung 17 und zur Grundplatte 20 erstreckende, kielförmige Begrenzungen auf. Diese Begrenzungen stellen für ein Hubelement, das in dieser Ausführungsform als ein Hubstift 5 ausgebildet, ist die Längsachsenbegrenzungen für einen sicheren axialen Halt zur Verfügung.

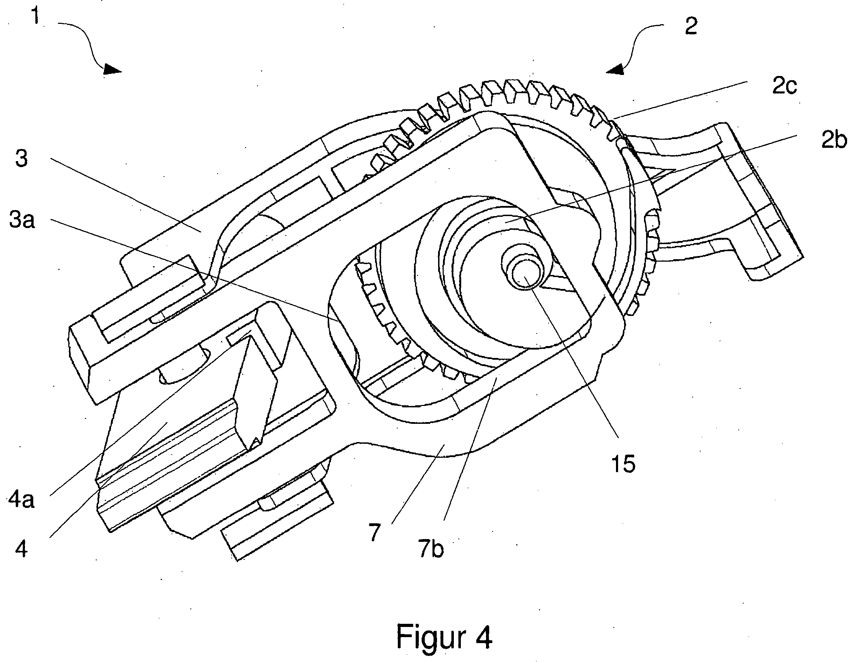

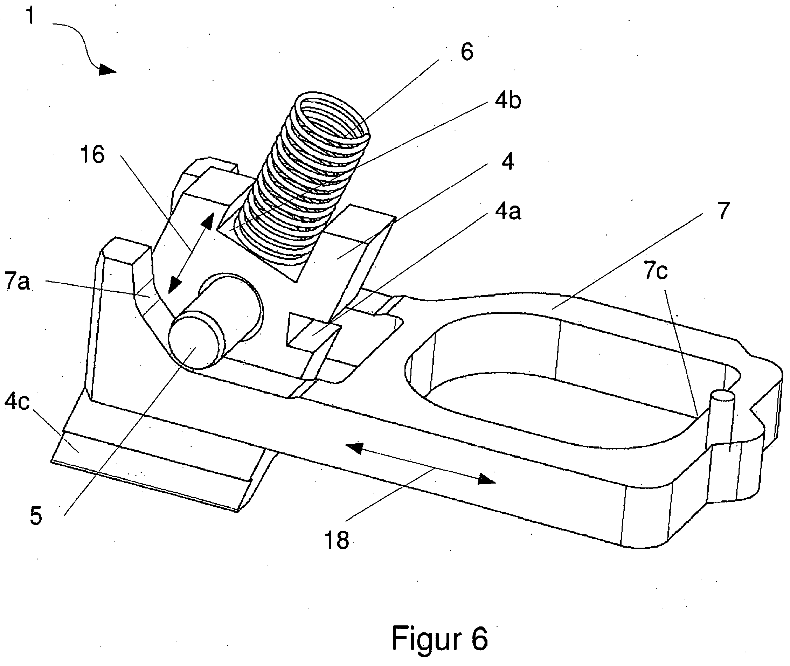

Figur 4 zeigt die nockenförmige untere Steuerkurve 2b des Antriebsrads 2 in Eingriff mit dem Steuerungsabschnitt 7b des Betätigungsschlittens 7. Der Betätigungsschlitten 7 ist in einem hinteren Abschnitt als ein sich im Wesentlichen horizontal erstreckendes, rahmenförmiges Rechteck ausgeführt, dessen einander zugewandte Flächen den Steuerungsabschnitt 7b bilden. Des Weiteren zeigen die Figuren 5 und 6 die sich parallel zu einer Betätigerschlittenbewegungsrichtung 18 in einem vorderen Abschnitt erstreckenden Hubabschnitte 7a. Diese kurven- oder keilförmigen Hubabschnitte 7a weisen nach vorne ansteigende Flächen auf, die auf einer kurzen Strecke einen hohen Hub auf den Hubstift 5 übertragen.

Der aus Figur 6 entnehmbare Sperrbolzen 4 weist im Wesentlichen einen länglichen, rechteckförmigen Querschnitt mit entsprechender Längs- und Querachse auf. Jeweils zwei gegenüberliegende Flächen sind dabei im Wesentlichen planparallel ausgebildet. In einem mittleren Abschnitt weist der Sperrbolzen 4 eine die beiden breiteren Flächen senkrecht durchdringende Bohrung zur spielfreien Aufnahme des Hubstifts 5 auf, der die von den Hubabschnitten 7a gesteuerte Hubbewegung des Hubstifts 5 auf den Sperrbolzen 4 in einer Sperrbolzenbewegungsrichtung 16 überträgt. Auf der zum Schieber 3 weisenden Fläche des Sperrbolzens 4 ist im mittleren Abschnitt noch eine Sicherungsnut 4a rechteckförmig integral ausgebildet. Ferner ist innerhalb der Seitenflächen in einem oberen Abschnitt eine Anbringung für einen Aktuator ausgeführt, die in dieser Ausführungsform als eine Federaufnahme 4b zur Aufnahme des als Feder 6 ausgeführten Aktuators ausgebildet. Dabei ist die Federaufnahme 4b als ein sich in Längsrichtung des Sperrbolzen 4, bzw. in Sperrbolzenbewegungsrichtung 16, erstreckender, dornartiger Vorsprung einstückig mit dem Sperrbolzen 4 ausgebildet, der die Feder 6 radial fixiert. Über diese Federaufnahme 4b wird der Sperrbolzen 4 durch die Feder 4 in die Sperrbolzenbewegungsrichtung 16 drückend bewegt. Hierbei weist die Feder 4 eine erste Kraftkomponente senkrecht nach unter zur Grundplatte 20 und eine zweite Kraftkomponente parallel zum Betätigungsschlitten 7 auf. Des Weiteren weist der Sperrbolzen 4 einen unteren im Wesentlichen keil- oder kufenförmigen Sperrabschnitt 4c auf, der in eine Vertiefung oder Nut an der Lenkachse zu deren Verriegelung eingreifen kann. Dabei verläuft die Längserstreckung des keilförmigen Abschnitts in Längsachsenrichtung bzw. in Sperrbolzenbewegungsrichtung 16.

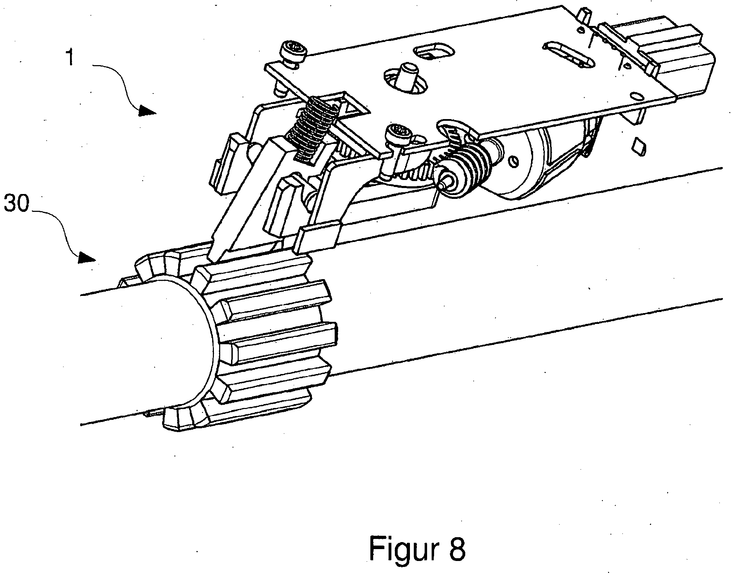

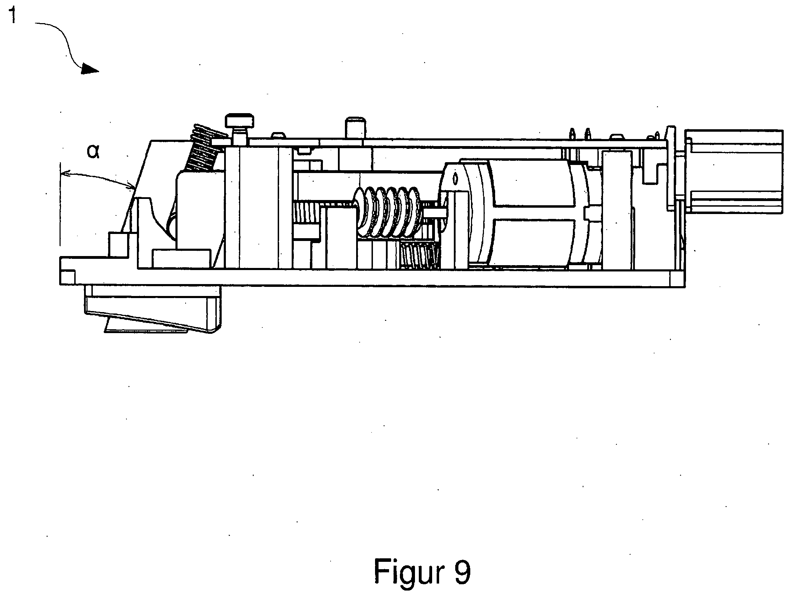

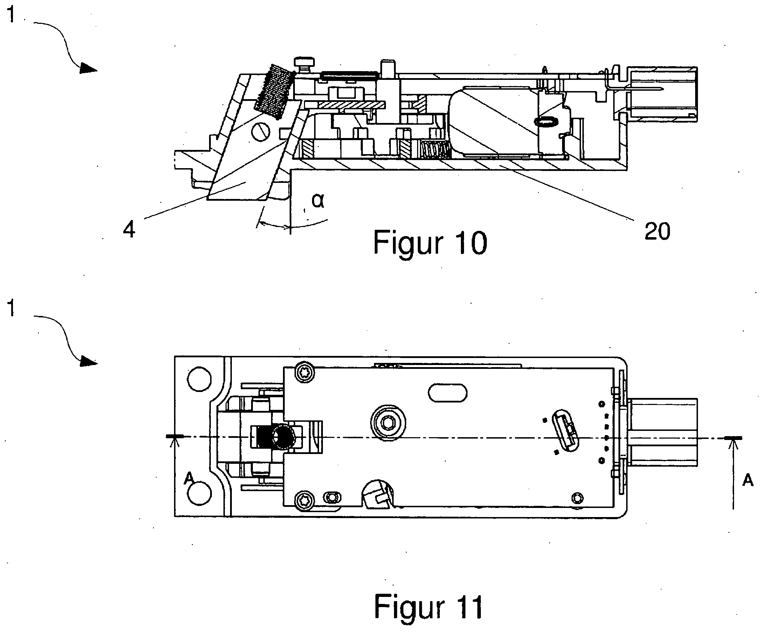

Mit Beginn eines Entriegelungsvorgangs wird das Antriebsrad 2 durch den Motor 12 über die Antriebswelle 13 durch das Getrieberad 14 angetrieben. Dabei wandelt das Antriebsrad 2 eine Rotationsbewegung durch die untere Steuerkurve 2b und den Steuerungsabschnitt 7b des Betätigungsschlittens 7 in eine translatorische Bewegung in Betätigerschlittenbewegungsrichtung 18 um. Dabei überträgt die Nocke der unteren Steuerkurve 2b eine Druckkraft auf eine hintere Querfläche 7c des Steuerungsabschnitts 7b. Dadurch wird der Betätigungsschlitten 7 in Richtung Antriebsrad 2 bewegt. Aufgrund der kurven- bzw. keilförmigen Ausgestaltung des Hubabschnitts 7a wird der Hubstift 5 und damit der Sperrbolzen 4 in Sperrbolzenbewegungsrichtung 16, die im Wesentlichen um 15° bis 20°, insbesondere um 18° zur Senkrechten geneigt ist, nach oben bewegt und erhöht in der Feder 6 die Druckspannung. Durch diese Bewegung wird der Eingriff des Sperrbolzens 4 in einer Lenkachse 30 bzw. einer Lenkspindel gelöst. Die Neigung ist den Figuren 9 und 10 entnehmbar und mit α gekennzeichnet. Des Weiteren ist der Eingriff des Sperrbolzens 4 in die Lenkachse 30 in der Figur 8 dargestellt.

Zusätzlich bewegt das Antriebsrad 2 die exzentrisch ausgeführte obere Steuerkurve 2a, mit der sich die Eingriffsnase 3b des Schiebers 3 in Eingriff befindet. Dabei drückt die Innenfläche der oberen Steuerkurve 2a gegen die Eingriffsnase 3b und verhindert eine unbeabsichtigte Bewegung des Schiebers 3 aufgrund der Druckspannung der Schieberfeder 3c, die zwischen der Grundplatte 20 über die Aufnahme 20a und dem Schieber 3 aufgebaut wurde. Somit wird der Schieber 3 in Schieberbewegungsrichtung 17 gesteuert und bewegt sich in Richtung Sperrbolzen 4. Erreicht der Schieber seine Endposition, dann befindet sich die Sicherungskante 3a des Schiebers 3 mit der an dem Sperrbolzen 4 integral ausgebildeten Sicherungsnut 4a in formschlüssigem Eingriff und bildet ein Eingriffspaar, das ein unbeabsichtigtes Verriegeln der Lenkverriegelung verhindert.

Beim Verriegelungsvorgang wird der Schieber 3 aufgrund des Eingriffs der Eingriffsnase 3a mit der Innenfläche der oberen Steuerkurve 2a gegen die Federspannung der Schieberfeder 3c in Schieberbewegungsrichtung 17 in Richtung Schieberfeder 3c bewegt. Dadurch wird das Eingriffspaar Sicherungsnut 4a und Sicherungskante 3a aufgelöst. Des Weiteren vermindert die untere Steuerkurve 2b den Druck auf den Steuerungsabschnitt 7b. Dadurch wird der Sperrbolzen 4 durch die Druckspannung der Feder 6 geneigt in Richtung Grundplatte bewegt und drückt den Betätigungsschlitten 7 in Betätigerschlittenbewegungsrichtung 18 in Richtung Sperrbolzen 4, bis zum Eingriff des Sperrbolzens 4 in die Lenkspindel.

Die hier beschriebene vorteilhafte Ausführungsform dient lediglich der Erläuterung und stellt keine Einschränkung des Schutzumfangs dar.

In einer nicht gezeigten abgewandelten Ausführungsform ist ein Sperrbolzen als Drehteil aus C45 ausgebildet.

In weiteren Ausführungsformen sind für einen Sperrbolzen sowohl weitere geometrische Formen wie, Würfel, Zylinder, etc., als auch andere Materialien wie Aluminium, faserverstärkter Kunststoffe etc., denkbar.

In einer weiteren Ausführungsform kann ein Sperrbolzen dreiteilig ausgeführt sein, mit einem oberen Abschnitt, einem unteren keilförmigen Abschnitt und einem die beiden Abschnitte verbindenden Rastelement. Dabei weisen die beiden dem Rastelement zugewandten Oberflächen des oberen und unteren Abschnittes jeweils eine Verzahnung für einen rastförmigen Eingriff mit dem Rastelement auf. Das würde einen Winkelversatz zwischen einem Sperrbolzen und einer Lenkspindel ausgleichen.

In einer nicht gezeigten abgewandelten Ausführungsform ist ein Antriebsrad aus einem faserverstärkten Kunststoff im Spritzgussverfahren hergestellt. Aber.auch andere Materialien wie Aluminium, Stahlsorten, C45 etc., sind denkbar.

In weiteren Ausführungsformen sind für einen Schieber und Betätigungsschlitten auch andere Herstellungsverfahren wie Spritzguss, Sinterverfahren, als auch andere Werkstoffe wie Verbundwerkstoffe, Kunststoffe, metallische Verbindungen, Aluminium, etc. denkbar.

In einer weiteren Ausführungsform ist für die Herstellung eines Schiebers und Betätigungsschlittens ein Druckgussverfahren mit einer Zamak-Legierung, z.B. ZnAl4Cu1 denkbar.

Als Aktuator ist z.B. auch eine Antrieb oder eine hydraulische oder pneumatische Vorrichtung denkbar.

### Bezugszeichenliste

- 1: Elektrische Lenkverriegelung
- 2: Antriebsrad
- 2a: Obere Steuerkurve
- 2b: Untere Steuerkurve, als Nocke
- 2c: Verzahnung
- 3: Schieber
- 3a: Sicherungskante
- 3b: Eingriffsnase
- 3c: Schieberfeder
- 3d: Schieberbolzen
- 4: Sperrbolzen
- 4a: Sicherungsnut
- 4b: Federaufnahme
- 4c: Sperrabschnitt
- 5: Hubstift
- 6: Feder
- 7: Betätigungsschlitten
- 7a: Hubabschnitt
- 7b: Steuerungsabschnitt
- 7c: Querfläche
- 10: Magnet
- 11: Mikroschalter
- 12: Motor
- 13: Antriebswelle
- 14: Getrieberad
- 15: Drehachse
- 16: Sperrbolzenbewegungsrichtung
- 17: Schieberbewegungsrichtung
- 18: Betätigerschlittenbewegungsrichtung
- 20: Grundplatte
- 30: Lenkachse

## Patentansprüche

1. Elektrische Lenkverriegelung (1) für ein Fahrzeug, welche folgendes aufweist:
eine Grundplatte (20),
eine auf der Grundplatte (20) angebrachte Antriebseinheit,
ein Antriebsrad (2), das mit der Antriebseinheit in Eingriff steht,
einen Betätigungsschlitten (7) mit einem kurven- oder keilförmigen Hubabschnitt (7a) und einem Steuerungsabschnitt (7b), der von dem Antriebsrad (2) ansteuerbar ist,
einen Sperrbolzen (4) zum Verriegeln einer Lenkachse, der durch den Hubabschnitt (7a) des Betätigungsschlittens (7) verschiebbar ist und
einen Aktuator, der eine erste Kraftkomponente senkrecht zur Bewegungsrichtung des Betätigungsschlitten und eine zweite Kraftkomponente parallel zur Bewegungsrichtung des Betätigungsschlitten aufweist, wobei der Sperrbolzen (4) über ein Hubelement an dem Hubabschnitt (7a) anliegt.

2. Elektrische Lenkverriegelung (1) nach Anspruch 1, wobei das Antriebsrad (2) eine obere Steuerkurve (2a), eine untere Steuerkurve (2b) und eine Verzahnung (2c) aufweist.

3. Elektrische Lenkverriegelung (1) nach einem der vorhergehenden Ansprüche, wobei ein von der oberen Steuerkurve (2a) des Antriebsrads (2) betätigter Schieber (3) eine Sicherungskante (3a) aufweist, die im, unverriegelten Zustand der elektrischen Lenkverriegelung in eine Sicherungsnut (4a) des Sperrbolzens (4) eingreift und einen Verriegelungsschutz zur Verfügung stellt.

4. Elektrische Lenkverriegelung (1) nach einem der vorhergehenden Ansprüche, wobei die obere Steuerkurve (2a), die untere Steuerkurve (2b) und die Verzahnung (2c) einteilig mit dem Antriebsrad (2) ausgebildet sind.

5. Elektrische Lenkverriegelung (1) nach einem der vorhergehenden Ansprüche, wobei die obere Steuerkurve (2a) kulissenförmig auf einer der Rotationsachse (15) zugewandten Innenfläche und die untere Steuerkurve (2b) nockenförmig auf einer der Rotationsachse (15) abgewandten Außenfläche ausgebildet ist.

6. Elektrische Lenkverriegelung (1) nach einem der vorhergehenden Ansprüche, wobei der kurven- oder keilförmige Hubabschnitt (7a) und der kulissenförmige Steuerungsabschnitt (7b) integral mit dem Betätigungsschlitten (7) ausgebildet sind.

7. Elektrische Lenkverriegelung (1) nach einem der vorhergehenden Ansprüche, wobei der Betätigungsschlitten (7) parallel zur Bodenplatte (20) in der Betätigerschlittenbewegungsrichtung (18) verschiebbar ist.

8. Elektrische Lenkverriegelung (1) nach einem der vorhergehenden Ansprüche, wobei der Schieber (3), der Betätigungsschlitten (7) und die Bodenplatte (20) parallel zueinander angeordnet sind.

9. Elektrische Lenkverriegelung (1) nach einem der vorhergehenden Ansprüche, wobei die Schieberbewegungsrichtung (17) des Schiebers (3) im Wesentlichen parallel zur Betätigungsschlittenbewegungsrichtung (18) des Betätigungsschlittens (7) ausgerichtet ist.

10. Elektrische Lenkverriegelung (1) nach einem der vorhergehenden Ansprüche, wobei das Antriebsrad (2) zwischen dem Schieber (3) und dem Betätigungsschlitten (7) angeordnet ist.

11. Elektrische Lenkverriegelung (1) nach einem der vorhergehenden Ansprüche, wobei der Sperrbolzen (4) zum Entriegeln über den Hubabschnitt (7a) des Betätigungsschlittens (7) durch das Hubelement und zum Verriegeln durch den Aktuator bewegbar ist.

12. Elektrische Lenkverriegelung (1) nach einem der vorhergehenden Ansprüche, wobei die Antriebseinheit einen Motor (12) mit Antriebswelle (13) und Getrieberad (14) aufweist.

13. Elektrische Lenkverriegelung (1) nach einem der vorhergehenden Ansprüche, wobei der Sperrbolzen (4) gegenüber dem Betätigungsschlitten (7) geneigt angeordnet ist und eine Hubbewegung in Sperrbolzenbewegungsrichtung (16) zwischen einer Sperrstellung zur Sperrung einer Lenkspindel und einer Freigabestellung zur Freigabe der Lenkspindel geneigt gegenüber einer Betätigungsschlittenbewegungsrichtung (18) des Betätigungsschlittens (7) gerichtet ist.

14. Verfahren zur Betätigung einer elektrischen Lenkverriegelung (1) für ein Fahrzeug, welche folgendes aufweist:
eine Grundplatte (20),
eine auf der Grundplatte (20) angebrachte Antriebseinheit,
ein Antriebsrad (2), das mit der Antriebseinheit in Eingriff steht,
einen Betätigungsschlitten (7) mit einem kurven- oder keilförmigen Hubabschnitt (7a) und einem Steuerungsabschnitt (7b), der von dem Antriebsrad (2) angesteuert wird,
einen Sperrbolzen (4) zum Verriegeln einer Lenkachse, der durch den Hubabschnitt (7a) des Betätigungsschlittens (7) bewegt wird, wobei das Verfahren folgende Schritte aufweist:
- Umwandlung der Rotationsbewegung der Antriebseinheit in eine translatorische Bewegung eines Betätigungsschlitten (7) durch das Antriebsrad (2);
- Umwandlung der translatorischen Bewegungsrichtung des Betätigungsschlitten (7) in eine Hubbewegung des Sperrbolzen (4) durch den kurven- oder keilförmigen Hubabschnitt (7a) und ein Hubelement.

## Claims

1. Electric steering lock (1) for a vehicle, which comprises the following:
- a base plate (20),
- a drive unit mounted on the base plate (20),
- a drive wheel (2) which is in engagement with the drive unit,
- an actuating carriage (7) having a curved or wedge-shaped lifting section (7a) and a control section (7b) which can be controlled by the drive wheel (2),
- a latching bolt (4) which can be displaced by the lifting section (7a) of the actuating carriage (7) for locking a steering axle, and
- an actuator which has a first force component perpendicular to the direction of movement of the actuating carriage and a second force component parallel to the direction of movement of the actuating carriage, wherein the latching bolt (4) bears against the lifting section (7a) by means of a lifting element.

2. Electric steering lock (1) according to claim 1, wherein the drive wheel (2) has an upper control curve (2a), a lower control curve (2b) and a toothing (2c).

3. Electric steering lock (1) according to one of the preceding claims, wherein a slider (3) actuated by the upper control curve (2a) of the driving wheel (2) has a securing edge (3a) which in the unlocked state of the electric steering lock engages in a securing groove (4a) of the latching bolt (4) and provides a locking protection.

4. Electric steering lock (1) according to one of the preceding claims, wherein the upper control curve (2a), the lower control curve (2b) and the toothing (2c) are formed in one piece with the drive wheel (2).

5. Electric steering lock (1) according to one of the preceding claims, wherein the upper control curve (2a) is formed as a slide on an inner face facing the axis of rotation (15) and the lower control curve (2b) is formed as a cam on an outer face facing away from the axis of rotation (15).

6. Electric steering lock (1) according to one of the preceding claims, wherein the curve-shaped or wedge-shaped lifting section (7a) and the slide-shaped control section (7b) are formed integrally with the actuating carriage (7).

7. Electric steering lock (1) according to one of the preceding claims, wherein the actuating carriage (7) can be displaced parallel to the base plate (20) in the direction of movement (18) of the actuator carriage.

8. Electric steering lock (1) according to one of the preceding claims, wherein the slide (3), the actuating carriage (7) and the base plate (20) are disposed parallel to one another.

9. Electric steering lock (1) according to one of the preceding claims, wherein the direction of movement (17) of the slider (3) is oriented substantially parallel to the direction of movement (18) of the actuator carriage (7).

10. Electric steering lock (1) according to one of the preceding claims, wherein the drive wheel (2) is disposed between the slider (3) and the actuating carriage (7).

11. Electric steering lock (1) according to one of the preceding claims, wherein the latching bolt (4) is movable for unlocking by means of the lifting section (7a) of the actuating carriage (7) by the lifting element and for locking by the actuator.

12. Electric steering lock (1) according to one of the preceding claims, wherein the drive unit has a motor (12) with a drive shaft (13) and a gear wheel (14).

13. Electric steering lock (1) according to one of the preceding claims, wherein the latching bolt (4) is inclined relative to the actuating carriage (7) and a lifting movement is directed in the direction of movement (16) of the latching bolt between a latched position for latching a steering shaft and a release position for release of the steering shaft inclined relative to a direction of movement (18) of the actuator carriage (7).

14. Method for actuating an electric steering lock (1) for a vehicle, comprising the following:
- a base plate (20),
- a drive unit mounted on the base plate (20).
- a drive wheel (2) which is in engagement with the drive unit,
- an actuating carriage (7) having a curved or wedge-shaped lifting section (7a) and a control section (7b) which is controlled by the drive wheel (2). a latching bolt (4) for locking a steering axle which can be moved by the lifting section (7a) of the actuating carriage (7), wherein the method includes the following steps:
- transformation of the rotational movement of the drive unit into a translational movement of an actuating carriage (7) by the drive wheel (2);
- transformation of the translational direction of movement of the actuating carriage (7) into a lifting movement of the latching bolt (4) by the curved or wedge-shaped lifting section (7a) and a lifting element.

## Revendications

1. Un verrou de direction électrique (1) pour véhicule comprenant :
une plaque de base (20),
une unité d'entraînement disposée sur la plaque de base (20),
une roue d'entraînement (2) en contact avec l'unité d'entraînement,
un chariot d'actionnement (7) avec une section de levage (7a) incurvée ou cunéiforme et une section de commande (7b) pouvant être commandée par la roue d'entraînement (2),
un pêne de blocage (4) pour le verrouillage d'une colonne de direction, pouvant être coulissé par la section de levage (7a) du chariot d'actionnement (7) et
un actionneur qui présente une première composante dynamique perpendiculaire au sens de déplacement du chariot d'actionnement et une seconde composante dynamique parallèle au sens de déplacement du chariot d'actionnement, le pêne de blocage (4) étant disposé au dessus d'un élément de levage sur la section de levage (7a).

2. Le verrou de direction électrique (1) selon la Revendication 1, dans lequel la roue d'entraînement (2) présente une courbe de commande supérieure (2a), une courbe de

3. Le verrou de direction électrique (1) selon l'une quelconque des Revendications précédentes, dans lequel un curseur (3) actionné par la courbe de commande supérieure (2a) de la roue d'entraînement (2) présente une arrête de sécurité (3a) qui, dans un état déverrouillé du verrou de direction électrique, vient en prise avec une rainure de sécurité (4a) du pêne de blocage (4) et constitue une protection contre le verrouillage.

4. Le verrou de direction électrique (1) selon l'une quelconque des Revendications précédentes, dans lequel la courbe de commande supérieure (2a), la courbe de commande inférieure et l'engrenage (2c) sont réalisés d'un seul tenant avec la roue d'entraînement (2).

5. Le verrou de direction électrique (1) selon l'une quelconque des Revendications précédentes, dans lequel la courbe de commande supérieure (2a) est disposée, sous forme de coulisse, sur une surface intérieure orientée vers l'axe de rotation (15) et la courbe de commande inférieure (2b) est disposée, sous forme de came, sur une surface extérieure opposée à l'axe de rotation (15).

6. Le verrou de direction électrique (1) selon l'une quelconque des Revendications précédentes, dans lequel la section de levage (7a) incurvée ou cunéiforme et la section de commande (7b) à la forme de coulisse sont réalisées d'un seul tenant avec le chariot d'actionnement (7).

7. Le verrou de direction électrique (1) selon l'une quelconque des Revendications précédentes, dans lequel le chariot d'actionnement (7) coulisse parallèlement à la plaque de base (20) dans le sens de déplacement du chariot d'actionnement (18).

8. Le verrou de direction électrique (1) selon l'une quelconque des Revendications précédentes, dans lequel le curseur (3), le chariot d'actionnement (7) et la plaque de base (20) sont disposés parallèlement les uns aux autres.

9. Le verrou de direction électrique (1) selon l'une quelconque des Revendications précédentes, dans lequel le sens de déplacement du curseur (17) du curseur (3) est essentiellement parallèle au sens de déplacement du chariot d'actionnement (18) du chariot d'actionnement (7).

10. Le verrou de direction électrique (1) selon l'une quelconque des Revendications précédentes, dans lequel la roue d'entraînement (2) est disposée entre le curseur (3) et le chariot d'actionnement (7).

11. Le verrou de direction électrique (1) selon l'une quelconque des Revendications précédentes, dans lequel le pêne de blocage (4) peut être déplacé pour le déverrouillage via la section de levage (7a) du chariot d'actionnement (7) par l'élément de levage et pour le verrouillage par l'actionneur.

12. Le verrou de direction électrique (1) selon l'une quelconque des Revendications précédentes, dans lequel l'unité d'entraînement présente un moteur (12) muni d'un arbre de transmission(13) et d'une roue d'engrenage (14).

13. Le verrou de direction électrique (1) selon l'une quelconque des Revendications précédente, dans lequel le pêne de blocage (4) est disposé de manière inclinée par rapport au chariot d'actionnement (7) et un déplacement de levage dans le sens de déplacement du pêne de blocage (16) est orienté de manière inclinée par rapport au sens de déplacement du chariot d'actionnement (18) du chariot d'actionnement (7) entre une position de verrouillage pour le verrouillage d'un arbre de direction et une position de déverrouillage pour le déverrouillage de l'arbre de direction.

14. Procédé d'actionnement d'un verrou de direction électrique (1) pour véhicule comprenant :
une plaque de base (20),
une unité d'entraînement disposée sur la plaque de base (20),
une roue d'entraînement (2) en contact avec l'unité d'entraînement,
un chariot d'actionnement (7) avec une section de levage (7a) incurvée ou cunéiforme et une section de commande (7b) commandée par la roue d'entraînement (2),
un pêne de blocage (4) pour le blocage d'une colonne de direction, pouvant être coulissé par la section de levage (7a) du chariot d'actionnement (7), le procédé d'actionnement comprenant les étapes suivantes :
- conversion d'un mouvement rotatif de l'unité d'entrainement en un mouvement translatif d'un chariot d'actionnement (7) par la roue d'entraînement (2) ;
- conversion du sens translatif de mouvement du chariot d'actionnement (7) en un mouvement de levage du pêne de blocage (4) par la section de levage (7a) incurvée ou cunéiforme et un élément de levage.
